# EUROPEAN PATENT APPLICATION

(11) **EP 4 366 055 A1**
(43) Date of publication of application: **08.05.2024**
(21) Application number: 23199763.6
(22) Date of filing: 26.09.2023
(51) Int. Cl.: H01M 50/204, H01M 50/284, H01R 12/70, H01R 13/631, H01R 13/64

(54) **CONNECTOR POSITION ALIGNMENT ASSEMBLY AND BATTERY MODULE INCLUDING THE SAME**

(30) Priority: 27.10.2022 KR 20220140585
(71) Applicant: SK On Co., Ltd., Seoul 03161 (KR)
(72) Inventor: LEE, Gang U, 34124 Daejeon (KR); KIM, Ho Yeon, 34124 Daejeon (KR); AN, Sang Tae, 34124 Daejeon (KR); YOON, Hwa Kyoo, 34124 Daejeon (KR); HAN, Jeong Woo, 3124 Daejeon (KR)
(74) Representative: Prüfer & Partner mbB Patentanwälte · Rechtsanwälte

(57) **Abstract**

A connector position alignment assembly includes a first part and a second part coupled to each other through a connector and including a guide portion aligning a position of the connector. The guide portion is provided with a guide pin and a guide boss including portions protruding toward each other, and the guide pin and the guide boss respectively protrude further than the connector, in a direction in which the first part and the second part face each other, such that a portion of the guide pin is accommodated in the guide boss before the connectors are coupled to each other.

## Description

### TECHNICAL FIELD

The technology and implementations disclosed in this patent document generally relate to a connector position alignment assembly and a battery module including the same.

### BACKGROUND

Secondary batteries refer to batteries capable of repeating charging and discharging because mutual conversion between chemical energy and electrical energy is reversible.

Such a secondary battery may be used as an energy source for electric vehicles, hybrid vehicles, energy storage systems (ESSs), etc., which are recently attracting attention, including mobile devices.

The secondary battery may be used in a form in which one or more battery cells made of a flexible pouch-type battery cell or a rigid prismatic or cylindrical can-type battery cell are electrically connected, and in detail, in the case of an electric vehicle and the like requiring high power characteristics, a battery module in which one or more cell stacks in which a plurality of battery cells are stacked may be electrically connected or a battery pack in which one or more battery modules are electrically connected may be used.

Meanwhile, the battery pack may include a battery management system (BMS) managing one or more battery modules included in the battery pack. The BMS may monitor the temperature, voltage, current and the like of the battery module and control the operation of the battery pack based thereon.

The battery module may have a structure in which connectors provided on the PCB are coupled to each other to communicate with the BMS. In this case, if the positions of the connectors are slightly distorted, coupling between the connectors cannot be obtained, and thus, it is necessary to align the connectors in the correct positions.

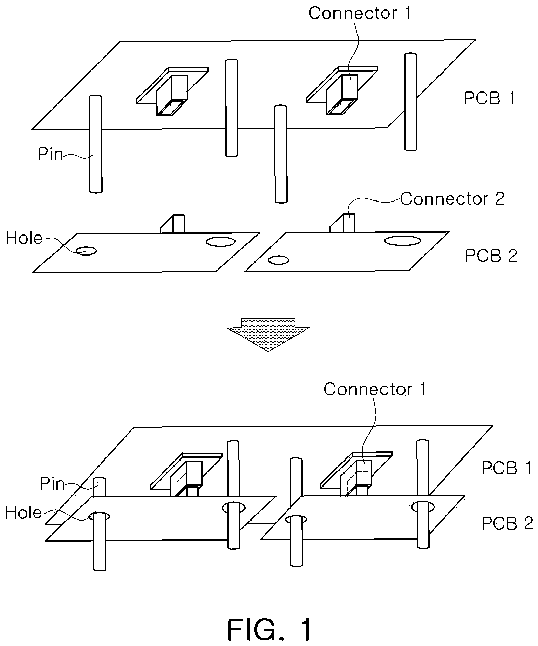

FIG. 1 is a view illustrating a connector alignment guide structure of the related art. Referring to FIG. 1, in the related art, positions of connectors 1 and 2 are aligned by inserting a guide pin into a guide hole.

In the position alignment structure of FIG. 1, the connectors 1 and 2 are roughly aligned by inserting a guide pin into the guide hole, and then, precise positioning is adjusted by moving the guide pin in the guide hole.

However, according to FIG. 1, since the guide pin protrudes to the other side of the guide hole in a state in which the connectors 1 and 2 are mutually coupled, sufficient space is required for the guide pin to protrude, and it is difficult to apply the structure of FIG. 1 in the case in which there is a space limitation.

### SUMMARY

The disclosed technology may be implemented in some embodiments to provide a connector position alignment assembly including a connector position alignment guide structure, and a battery module including the same.

The disclosed technology may be implemented in some embodiments to provide a connector position alignment assembly including a guide structure that is not limited by space, and a battery module including the same.

In some embodiments of the disclosed technology, a connector position alignment assembly includes a first part and a second part coupled to each other through a connector and including a guide portion aligning a position of the connector. The guide portion is provided with a guide pin and a guide boss including portions protruding toward each other, and the guide pin and the guide boss respectively protrude further than the connector, in a direction in which the first part and the second part face each other, such that a portion of the guide pin is accommodated in the guide boss before the connectors are coupled to each other.

The first part may include the guide pin and a first substrate on which the guide pin is disposed, and the second part includes the guide boss and a second substrate on which the guide boss is disposed, and the guide boss may be detachably coupled to the second substrate.

The second substrate may include a hole to which the guide boss is coupled, and the guide boss is hooked to the hole.

The guide boss may include a first guide boss having a circular cross section, and a second guide boss having an elliptical cross section and having a larger cross-sectional area than a cross sectional area of the first guide boss, and the first guide boss and the second guide boss may be disposed in a diagonal direction with respect to the connector on the second substrate.

The second substrate may include a first hole to which the first guide boss is coupled, and a second hole to which the second guide boss is coupled, and the second hole may be disposed such that a longitudinal direction of the second hole faces the first hole.

The guide boss may include a locking protrusion and a support protrusion alternately disposed along an outer circumferential surface of the guide boss, and a groove between the locking protrusion and the support protrusion in a longitudinal direction of the guide boss.

The locking protrusion and the support protrusion may be disposed at different heights in the longitudinal direction of the guide boss and may be supported on different surfaces of the second substrate, respectively.

The hole may further include a straight portion on a portion corresponding to the locking protrusion in a state in which the guide boss is inserted into the hole.

The guide boss may further include a fitting protrusion extending in the longitudinal direction of the guide boss from the support protrusion.

The hole may further include a key groove into which the fitting protrusion is inserted in a state in which the guide boss is coupled to the hole.

The second part may include a plurality of second substrates, and the first part includes one first substrate including the corresponding number of the connectors and the guide pins according to the number of the second substrates.

The guide boss may include a first guide boss having a circular cross section, and a second guide boss having an elliptical cross section, and the first and second guide bosses may be formed of a plastic material.

The second substrate may include a first hole to which the first guide boss is coupled, and a second hole coupled to the second guide boss and having a longitudinal direction obliquely disposed with respect to the first hole, and at least portions of the plurality of second substrates may have different arrangement directions of the first hole and the second hole.

In some embodiments of the disclosed technology, a battery module includes a first sub-battery module and a second sub-battery module arranged in a first direction; and the connector position alignment assembly described above, disposed at a boundary between the first sub-battery module and the second sub-battery module.

The first sub-battery module and the second sub-battery module may respectively include the second part, and the first part is simultaneously coupled to a second part of the first sub-battery module and a second part of the second sub-battery module to connect the first sub-battery module and the second sub-battery module.

### BRIEF DESCRIPTION OF DRAWINGS

Certain aspects, features, and advantages of the disclosed technology are illustrated by the following detailed description with reference to the accompanying drawings.
FIG. 1 is a view illustrating a connector alignment guide structure of the related art.
FIG. 2 is a schematic exploded perspective view of a connector position alignment assembly according to an embodiment of the disclosed technology.
FIGS. 3 and 4 are views illustrating a binding state of a connector position alignment assembly according to an embodiment of the disclosed technology.
FIG. 5 is a view illustrating a first part according to an embodiment.
FIG. 6 is an exploded perspective view of a second part according to an embodiment.
FIG. 7 is a plan view of a second substrate according to an embodiment.
FIGS. 8A and 8B are views illustrating first and second guide bosses according to an embodiment.
FIG. 9 is a perspective view of a coupled state of the second part according to an embodiment.
FIGS. 10A to 10C are enlarged views of a first guide boss, and FIGS. 11A to 11C are enlarged views of a second guide boss.
FIG. 12 is a schematic exploded perspective view of a battery module according to an embodiment.
FIG. 13 is an enlarged view of a region a connector position alignment assembly is applied of Fig. 12.

### DETAILED DESCRIPTION

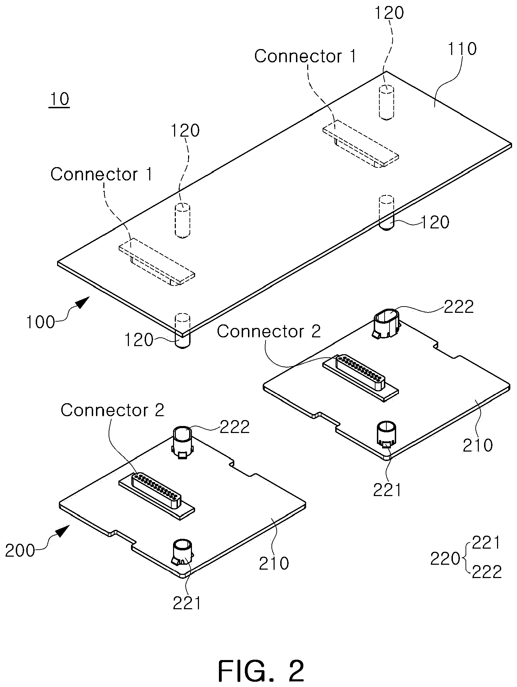

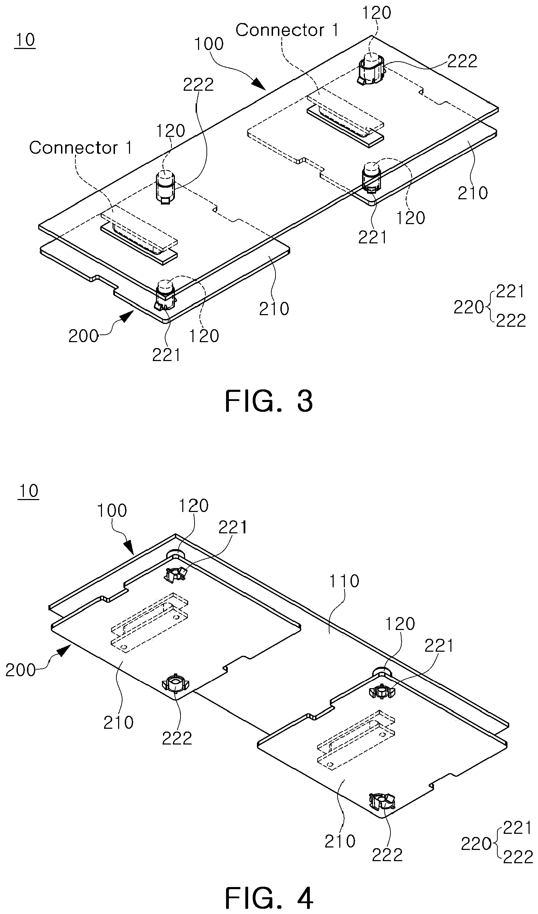

FIG. 2 is a schematic exploded perspective view of a connector position alignment assembly according to an embodiment, and FIGS. 3 and 4 are views illustrating a coupled state of the connector position alignment assembly according to an embodiment.

Referring to FIGS. 2 to 4, a connector position alignment assembly 10 according to an embodiment of the disclosed technology may include a first part 100 and a second part 200 disposed to face each other. The first part 100 and the second part 200 may include connectors and guide portions for aligning the positions of the connectors, respectively.

The connectors of the first part 100 and the second part 200 may be coupled to each other, and in detail, positions of the connectors are aligned by a guide pin 120 and a guide boss (bushing) 220 corresponding to the guide portion, to be described later, and thus, the connectors may be coupled to each other. For example, a portion of the guide pin 120 before interconnection between the connectors may be accommodated in the guide boss 220, and to this end, the guide pin 120 and the guide boss 220 may respectively protrude further than the connectors in the direction in which the first part 100 and the second part 200 face each other. In a state where the connectors are coupled to each other, the guide portion of the first part 100 may not protrude to the other side of the second part 200 as illustrated in FIG. 1.

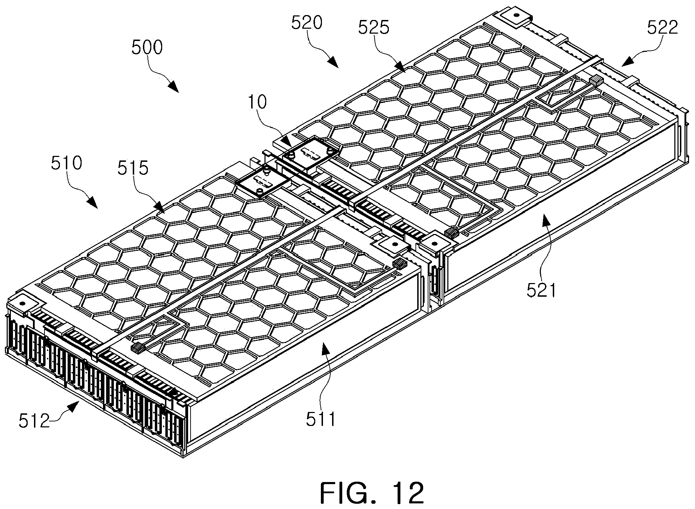

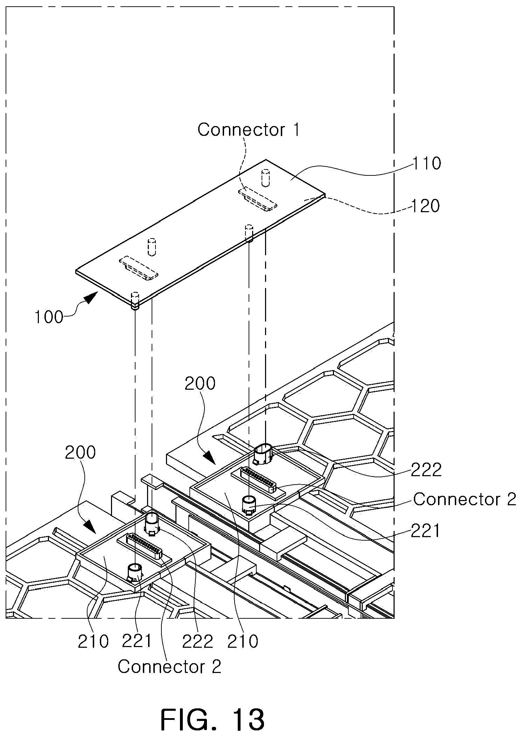

According to an embodiment, the connector position alignment assembly 10 may include one first part 100 and two second parts 200. According to this embodiment, one first part 100 may be coupled to two second parts 200. The connector position alignment assembly 10 according to this embodiment may be applied to a battery module 500 illustrated in FIGS. 12 and 13.

In this patent document, the connector position alignment assembly 10 according to the above-described embodiment will be described. However, in other embodiments, the number of second parts 200 may be changed.

Hereinafter, the first part 100 and the second part 200 of the connector position alignment assembly 10 according to an embodiment will be described in detail.

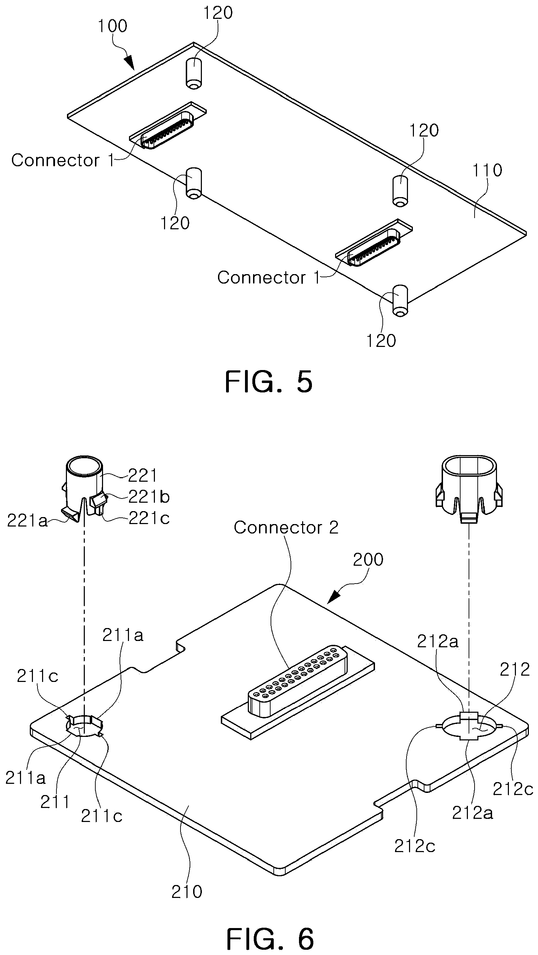

FIG. 5 is a view illustrating a first part according to an embodiment.

The first part 100 may include a first substrate 110 including a first connector 1 and guide pins 120. For example, the first substrate 110 may be a rigid printed circuit board. The first substrate 110 may have a shape extending in one direction (hereinafter, a first direction).

According to an embodiment, since one first part 100 is connected to two second parts 200, the first substrate 110 may include two first connectors (Connector 1). The first connectors (Connector 1) may be spaced apart from each other in the first direction on one surface of the first substrate 110 facing the second part 200.

The guide pin 120 may be disposed on one surface of the first substrate 110 together with the first connector (Connector 1). The guide pin 120 may be provided to protrude toward a second substrate 210, and may protrude more toward the second substrate 210 than the first connector (Connector 1) .

According to an embodiment, a pair of guide pins 120 may be disposed in a diagonal direction with respect to the first connector (Connector 1). Accordingly, two pairs of guide pins 120 may be disposed on the first substrate 110. The two pairs of guide pins 120 may be disposed substantially side by side.

Referring to FIG. 5, one of the pair of guide pins 120 may be disposed adjacent to the corner side of the first substrate 110 and the other may be disposed in a diagonal direction with respect thereto. In this case, since the two pairs of guide pins 120 are disposed in parallel directions, the guide pins 120 may be disposed at the corners facing each other in the diagonal direction of the first substrate 110.

One surface of the first substrate 110 including the first connector 1 and the guide pin 120 may face the second part 200.

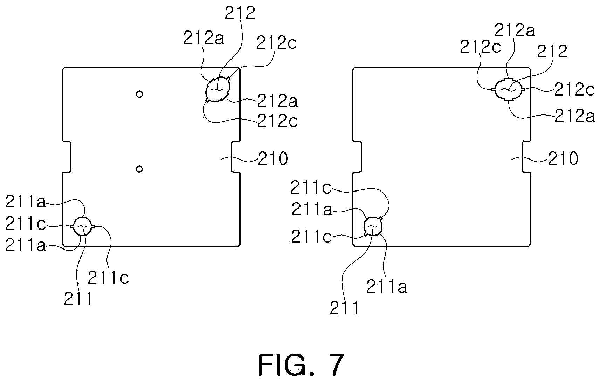

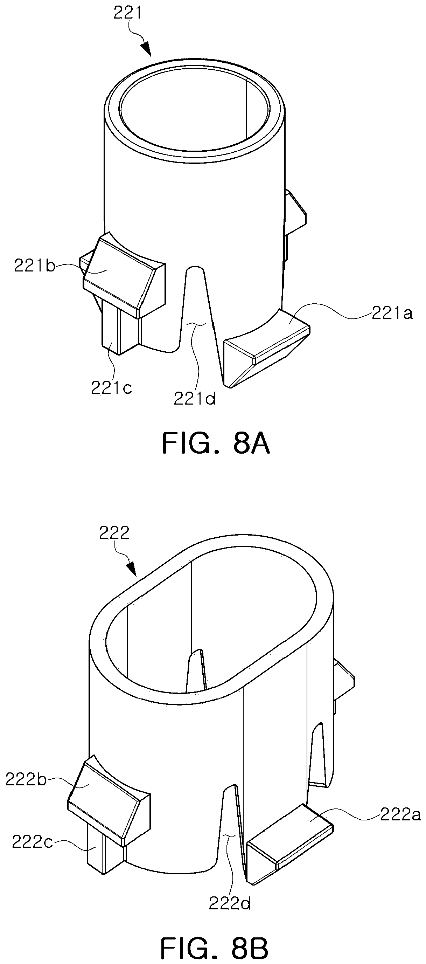

FIG. 6 is an exploded perspective view of a second part according to an embodiment, FIG. 7 is a plan view of a second substrate according to an embodiment, and FIGS. 8A and 8B are views illustrating first and second guide bosses according to an embodiment.

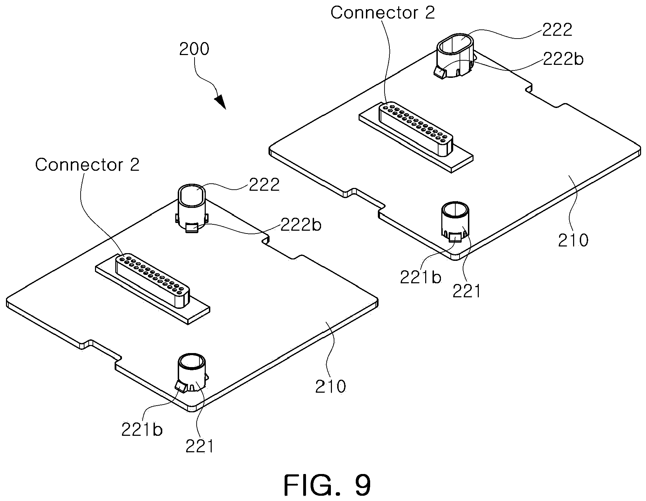

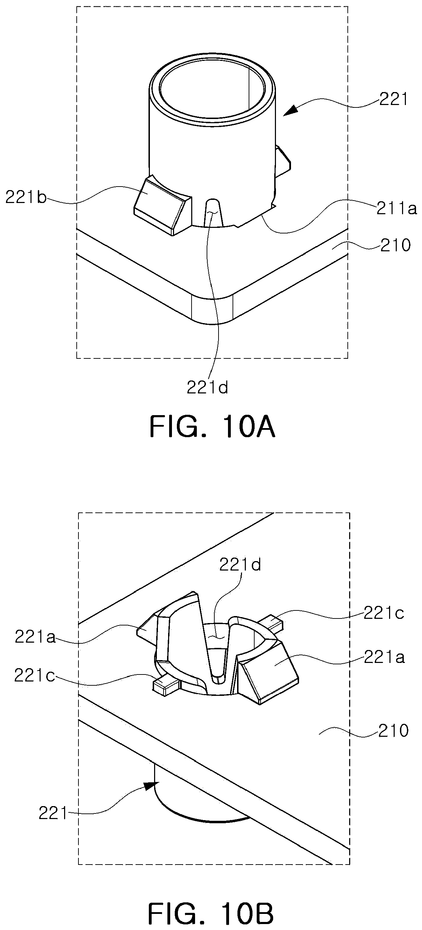

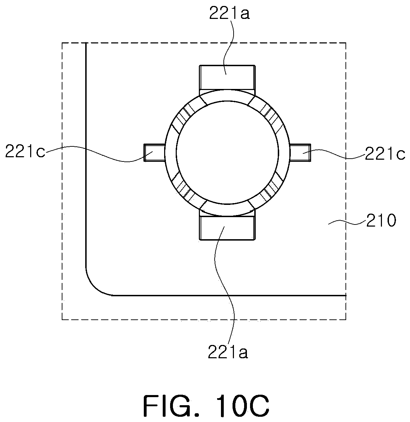

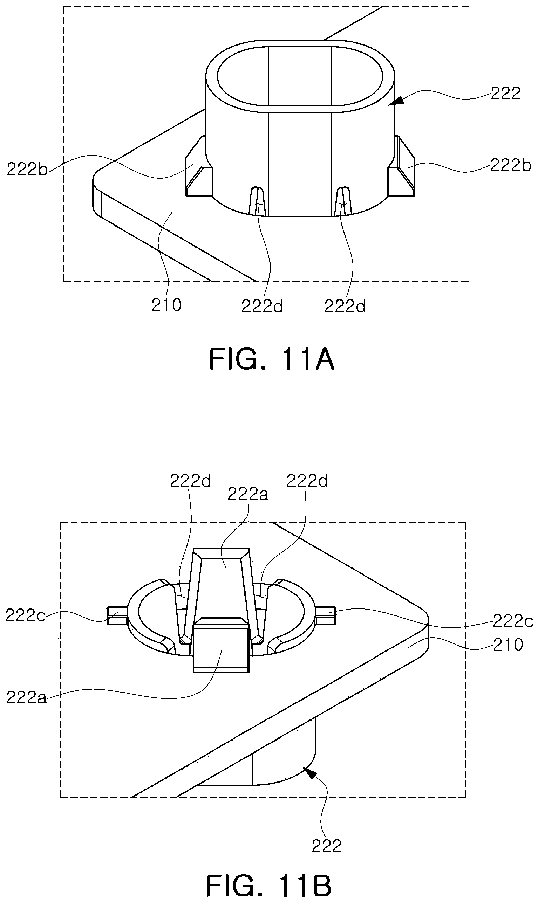

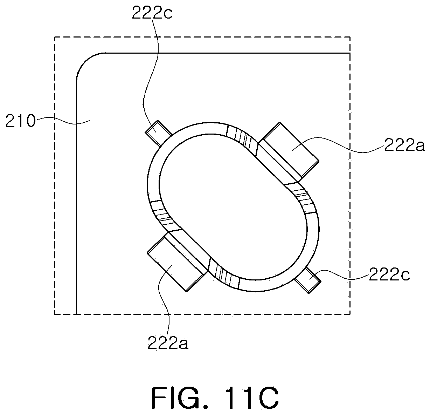

FIG. 9 is a perspective view of a coupled state of a second part according to an embodiment, FIGS. 10A to 10C are enlarged views of region A of FIG. 9, and FIGS. 11A to 11C are enlarged views of region B of FIG. 9.

The second part 200 may include the second substrate 210 including a second connector (Connector 2) and a guide boss 220. For example, the second substrate 210 may be a rigid printed circuit board. According to an embodiment, the second part 200 may include two second substrates 210, and the two second substrates 210 may be arranged in a first direction.

The second connector (Connector 2) and the guide boss 220 may be disposed on one surface of the second substrate 210. The second connector (Connector 2) and the guide boss 220 may be provided to protrude toward the first substrate 110, and the guide boss 220 may protrude further toward the first substrate 110 than the second connector (Connector 2).

According to an embodiment, the second connector (Connector 2) and the guide boss 220 may be formed in positions corresponding to the first connector (Connector 1) and the guide pin 120. Accordingly, a pair of guide bosses 220 may be disposed in a diagonal direction based on the second connector (Connector 2).

According to an embodiment, holes 211 and 212 may be formed in the second substrate 210, and the guide boss 220 may be disposed on the second substrate 210 in a form coupled to the holes 211 and 212.

Referring to FIG. 7, a first hole 211 and a second hole 212 may be formed in a diagonal direction with respect to the second connector (Connector 2) in the second substrate 210, and the first hole 211 and the second hole 212 may have different shapes and sizes. For example, the first hole 211 may have a substantially circular shape, and the second hole 212 may have a substantially oval shape. An area of the second hole 212 may be larger than the area of the first hole 211. In an embodiment, the first hole 211 may have a regular hole shape, and the second hole 212 may have a long hole shape.

The guide boss 220 may be coupled to the first hole 211 and the second hole 212, respectively. In more detail, the first guide boss 221 may be coupled to the first hole 211, and the second guide boss 222 may be coupled to the second hole 212.

Referring to FIG. 8A and FIG. 8B, the first guide boss 221 and the second guide boss 222 may have shapes and sizes corresponding to the first hole 211 and the second hole 212, respectively. For example, the first guide boss 221 may have a substantially circular cross section of a hole into which the guide pin 120 is inserted. The second guide boss 222 may have a substantially oval cross section of a hole into which the guide pin 120 is inserted. Also, the cross-sectional area of the second guide boss 222 may be larger than the cross-sectional area of the first guide boss 221. For example, the first guide boss 221 may include a regular hole, and the second guide boss 222 may include a long hole.

According to an embodiment, the first part 100 and the second part 200 may be connected to each other by coupling the first connector (Connector 1) and the second connector (Connector 2). The first connector (Connector 1) and the second connector (Connector 2) may be coupled in a form in which one is inserted into the other. For example, the first connector (Connector 1) may be inserted into the second connector (Connector 2) or vice versa.

According to an embodiment, the guide pin 120 and the guide boss 220 may align the positions of the first connector (Connector 1) and the second connector (Connector 2). For example, a portion of the guide pin 120 may be inserted into the guide boss 220 facing each other before the first connector (Connector 1) and the second connector (Connector 2) are coupled, and therefore, the positions of the connector (Connector 1) and the second connector (Connector 2) may be guided and aligned.

In detail, according to an embodiment, the second substrate 210 includes a second hole 212 in the form of a long hole, and the guide boss 220 includes the second guide boss 222 having a cross section of the long hole shape coupled to the second hole 212, and therefore, a dimensional or positional tolerance of the guide pin 120 and/or the holes 211 and 212 may be absorbed.

According to an embodiment, the guide boss 220 may be a plastic injection molding. In this manner, when the guide boss 220 is formed of a plastic material, the weight of the part may be reduced and manufacturing costs thereof may be reduced. In addition, as the injection molding method is used in the manufacturing, there is an effect of facilitating long hole shape processing.

According to an embodiment, the guide boss 220 may be detachably coupled to the second substrate 210. For example, the guide boss 220 may be hook-coupled to the holes 211 and 212 formed in the second substrate 210. Accordingly, in more detail, the guide boss 220 may be formed of an elastically deformable plastic material.

Referring to FIGS. 8A and 8B, the first and second guide bosses 221 and 222 may include locking protrusions (220a: 221a and 222a) and support protrusions (220b: 221b and 222b) on outer circumferential surfaces. According to an embodiment, the locking protrusions 221a and 222a may be hook-coupled to the second substrate 210, and the support protrusions 221b and 222b may have a function similar to the function of a stopper.

For example, the first and second guide bosses 221 and 222 may include a pair of locking protrusions 221a and 222a and support protrusions 221b and 222b facing each other, and the locking protrusions 221a and 222a and the support protrusions 221b and 222b may be alternately disposed along the outer circumferential surface. In addition, grooves (220d: 221d and 222d) may be formed in the longitudinal direction of the first and second guide bosses 221 and 222, between the adjacent locking protrusions 221a and 222a and support protrusions 221b and 222b, such that the first and second guide bosses 221 and 222 are inserted into the first and second holes 211 and 212.

Also, referring to the drawings, in the first and second guide bosses 221 and 222, the portions where the locking protrusions 221a and 222a are formed extend more in the longitudinal direction than the portions where the support protrusions 221b and 222b are formed, and the locking protrusions 221a and 222a may be formed on lower end portions of the first and second guide bosses 221 and 222 in the longitudinal direction. As will be described later, through this structure, the locking protrusions 221a and 222a of the first and second guide bosses 221 and 222 are disposed on the other side of the second substrate 210 to support coupling, and the support protrusions 221b and 222b may support coupling on one surface of the second substrate 210.

In the coupled state, the locking protrusions 221a and 222a may be inserted through the holes 211 and 212 and supported on the other surface of the second substrate 210. For example, the locking protrusions 221a and 222a may have a shape in which the cross section becomes narrow in the longitudinal direction of the first and second guide bosses 221 and 222 from the support surface supported by the second substrate 210, to be easily inserted into the holes 211 and 212.

According to an embodiment, the holes 211 and 212 may have cross-sections (hereinafter, straight portions 211a and 212a) of a shape in which, a portion where the locking protrusions 221a and 222a are caught or a portion supported by the locking protrusions 221a and 222a is cut off. Accordingly, the first hole 211 may have a substantially circular cross section, and the second hole 212 may have a substantially oval shape. Since the first and second holes 211 and 212 have straight portions 211a and 212a, the supporting surfaces of the locking protrusions 221a and 222a may be caught by the first hole 211 and the second hole 212 and may thus be fixed.

Also, in the coupled state, the support protrusions 221b and 222b may be supported on one surface of the second substrate 210. For example, the support protrusions 221b and 222b may have a form in which the cross sections are narrowed in the longitudinal direction of the first and second guide bosses 221 and 222 from the support surface supported by the second substrate 210.

Referring back to FIGS. 8A and 8B, the first and second guide bosses 221 and 222 may include fitting protrusions (220c: 221c and 222c) on outer circumferential surfaces. Referring to FIG. 7, the first and second holes 211 and 212 may include key grooves 211c and 212c corresponding to the fitting protrusions 221c and 222c.

According to an embodiment, the first hole 211 and the second hole 212 formed in the same second substrate 210 may be disposed obliquely to each other. The second hole 212 may be disposed such that the longitudinal direction of the second hole 212 faces the first hole 211. For example, one end of the second hole 212 in the length direction may cross the length direction of the first hole 211. For example, the longitudinal directions of the first hole 211 and the second hole 212 may be directions in which the key grooves 211c and 212c are directed. The key groove 212c of the second hole 212 may be formed in the longitudinal direction of the second hole 212, for example, on a line extending along the long axis.

According to an embodiment, the first hole 211 and the second hole 212 formed in the same second substrate 210 may have different directions in which the key grooves 211c and 212c are directed, and the first hole 211 and the second hole 212 formed in different second substrates 210 may also be disposed at different angles. In detail, in the first hole 211 of the second substrate 210 disposed on the left side and the first hole 211 disposed on the right side in the drawing, directions in which the key groove 211c are directed may be different respectively, which may also be applied equally to the second hole 212. This arrangement may be effective in absorbing assembly tolerances in various directions.

According to an embodiment, the fitting protrusions 221c and 222c may extend in the longitudinal direction of the first and second guide bosses 221 and 222 from the support surfaces of the support protrusions 221b and 222b, and may be inserted into the key grooves 211c and 212c formed in the first and second holes 211 and 212. As the fitting protrusions 221c and 222c are inserted into the key grooves 211c and 212c, rotation of the first and second guide bosses 221 and 222 may be limited while being coupled to the first and second holes 211 and 212, and positions thereof may be fixed by the support protrusions 221b and 222b.

According to an embodiment, in the connector position alignment assembly 10, in a state in which the first connector (Connector 1) of the first part 100 and the second connector (Connector 2) of the second part 200 are coupled to each other, the guide pin 120 may not protrude to the other side of the second substrate 210.

In more detail, the guide boss 220 may be hooked to the holes 211 and 212 by the locking protrusions 221a and 222a formed at the lower end in the longitudinal direction, and may protrude toward one surface of the second substrate 210 (i.e., toward the first substrate 110 side) in a coupled state thereof. In this case, the guide pin 120 disposed on the first substrate 110 may be inserted into the corresponding guide boss 220, and the portion of the guide pin that has conventionally protruded to the other side of the second substrate may be accommodated in the guide boss 220 that protrudes toward one surface of the second substrate 210.

In detail, in the first part 100 and the second part 200, when the first connector (Connector 1) and the second connector (Connector 2) are coupled to each other, a gap is formed between the first substrate 110 and the second substrate 210 by approximately as much as the protruding portions of the first and second connectors (Connectors 1 and 2). In the connector position alignment assembly 10 according to an embodiment, by coupling the guide boss 220 to the second substrate 210, the guide pin 120 is accommodated in the gap formed between the first substrate 110 and the second substrate 210, and thus, the guide pin 120 may not protrude to the other side of the second substrate 210. Therefore, a separate space is not required on the other side of the second substrate 210.

On the other hand, the connector position alignment assembly 10 according to an embodiment described above may be applied to a battery module.

FIG. 12 is a schematic exploded perspective view of a battery module according to an embodiment, and FIG. 13 is an enlarged view of region C of FIG. 12.

Referring to FIG. 12, a battery module 500 according to an embodiment may include two sub-battery modules. For example, the battery module 500 may include a first sub-battery module 510 and a second sub-battery module 520. The first sub-battery module 510 and the second sub-battery module 520 may be arranged in the first direction.

The first and second sub-battery modules 510 and 520 may include cell stacks 511 and 521 including a plurality of battery cells stacked in one direction. In an embodiment, the stacking direction of the plurality of battery cells is perpendicular to the arrangement direction of the first and second sub-battery modules 510 and 520, and the longitudinal direction of the plurality of battery cells may be parallel to the arrangement direction of the first and second sub-battery modules 510 and 520.

The battery module 500 may include bus bar assemblies 512 and 522 disposed on both sides of the cell stacks 511 and 521 in the longitudinal direction. The plurality of battery cells may be electrically connected to busbars of the busbar assemblies 512 and 522.

The battery module 500 may include sensing assemblies 515 and 525 on upper portions of the cell stacks 511 and 521. The sensing assemblies 515 and 525 may sense information such as temperature, voltage and the like of the plurality of battery cells constituting the sub-battery modules 510 and 520.

On the other hand, in an embodiment, the second part 200 of the connector position alignment assembly 10 according to the above-described embodiment may be applied to the sensing assemblies 515 and 525. In an embodiment, the connector position alignment assembly 10 includes two second parts 200, which may be partial components of a sensing assembly (hereinafter, referred to as a first sensing assembly) 515 of the first sub-battery module 510 and a sensing assembly (hereinafter, referred to as a second sensing assembly) 525 of the second sub-battery module 520, respectively. In detail, the first sensing assembly 515 and the second sensing assembly 525 may include the second part 200 according to an embodiment. In addition, the second part 200 may be disposed at a boundary between the first sub-battery module 510 and the second sub-battery module 520.

Although omitted in FIG. 12, the battery module 500 according to an embodiment may include a cover member (not illustrated) in the process of finishing the battery module 500.

The first part 100 according to an embodiment may be disposed to simultaneously face the second parts 200 of the first and second sensing assemblies 515 and 525. Based on the drawing, since the second part 200 is disposed above the cell stacks 511 and 521, the first part 100 and the second part 200 may face each other in the height direction of the battery module 500.

According to an embodiment, the second part 200 may be a cell monitoring unit (CMU) that receives related sensing information such as temperature, voltage and the like of the plurality of battery cells. Accordingly, as the connectors of the first part 100 and the second part 200 are coupled to each other, sensing information relevant to the plurality of battery cells constituting the first sub-battery module 510 and the second sub-battery module 520, for example, temperature, voltage and the like, may be transmitted to the outside, for example, to a battery management system (BMS).

As described above, the connector position alignment assembly 10 according to an embodiment is easy to apply to a battery module and the like because it is not limited by space, and has an advantage of a relatively simple structure and low manufacturing costs. In addition, the battery module 500 including the aforementioned connector position alignment assembly 10 may have the same advantages.

As set forth above, a connector position alignment assembly according to an embodiment is not limited by space, and thus is easy to be applied to a battery module and the like, and has a simple structure and may be manufactured at relatively low costs.

In addition, the battery module including the aforementioned connector position alignment assembly has the same advantages.

## Claims

1. A connector position alignment assembly(10) comprising:
a first part(100) and a second part(200) coupled to each other through a connector and including a guide portion aligning a position of the connector,
wherein the guide portion is provided with a guide pin(120) and a guide boss(220) including portions protruding toward each other, and
the guide pin(120) and the guide boss(220) respectively protrude further than the connector, in a direction in which the first part and the second part face each other, such that a portion of the guide pin(120) is accommodated in the guide boss(220) before the connectors are coupled to each other.

2. The connector position alignment assembly(10) of claim 1, wherein the first part(100) includes the guide pin(120) and a first substrate(110) on which the guide pin(120) is disposed, and the second part(200) includes the guide boss(220) and a second substrate(210) on which the guide boss(220) is disposed,
wherein the guide boss(220) is detachably coupled to the second substrate(210).

3. The connector position alignment assembly(10) of claim 2, wherein the second substrate(210) includes a hole(211, 212) to which the guide boss(220) is coupled, and the guide boss(220) is hooked to the hole(211, 212).

4. The connector position alignment assembly(10) of anyone of claims 1 to 3, wherein the guide boss(220) includes a first guide boss(221) having a circular cross section, and a second guide boss(222) having an elliptical cross section and having a larger cross-sectional area than a cross sectional area of the first guide boss(221), and
the first guide boss(221) and the second guide boss(222) are disposed in a diagonal direction with respect to the connector on the second substrate(210).

5. The connector position alignment assembly(10) of anyone of claims 2 to 4, wherein the second substrate(210) includes a first hole(211) to which the first guide boss(221) is coupled, and a second hole(212) to which the second guide boss(222) is coupled,
wherein the second hole(212) is disposed such that a longitudinal direction of the second hole(212) faces the first hole(211).

6. The connector position alignment assembly(10) of anyone of claims 1 to 5, in particular of claim 3, wherein the guide boss(220) includes a locking protrusion(220a: 221a, 222a) and a support protrusion(220b: 221b, 222b) alternately disposed along an outer circumferential surface of the guide boss (220), and a groove (220d: 221d, 222d) between the locking protrusion(220a) and the support protrusion(220b) in a longitudinal direction of the guide boss(220).

7. The connector position alignment assembly(10) of claim 6, wherein the locking protrusion(220a) and the support protrusion(220b) are disposed at different heights in the longitudinal direction of the guide boss(220) and are supported on different surfaces of the second substrate(210), respectively.

8. The connector position alignment assembly(10) of claim 6 or 7, wherein the hole(211, 212) further comprises a straight portion(211a, 212a) on a portion corresponding to the locking protrusion(220a) in a state in which the guide boss(220) is coupled to the hole(211, 212).

9. The connector position alignment assembly(10) of anyone of claims 6 to 8, wherein the guide boss(220) further comprises a fitting protrusion(220c: 221c, 222c) extending in the longitudinal direction of the guide boss(220) from the support protrusion(220b) .

10. The connector position alignment assembly(10) of claim 9, wherein the hole(211, 212) further comprises a key groove(211c, 212c) into which the fitting protrusion(220c) is inserted in a state in which the guide boss (220) is coupled to the hole(211, 212).

11. The connector position alignment assembly(10) of anyone of claims 2 to 10, wherein the second part(200) includes a plurality of second substrates (210), and the first part(100) includes one first substrate(110) including the corresponding number of the connectors and the guide pins (120) according to the number of the second substrates(210) .

12. The connector position alignment assembly(10) of anyone of claims 1 to 11, wherein the guide boss(220) includes a first guide boss(221) having a circular cross section, and a second guide boss(222) having an elliptical cross section,
wherein the first and second guide bosses(221, 222) are formed of a plastic material.

13. The connector position alignment assembly(10) of claim 12, wherein the second substrate(210) includes a first hole(211) to which the first guide boss(221) is coupled, and a second hole(212) coupled to the second guide boss(222) and having a longitudinal direction obliquely disposed with respect to the first hole(211), and
at least portions of the plurality of second substrates(210) have different arrangement directions of the first hole(211) and the second hole(212).

14. A battery module(500) comprising:
a first sub-battery module(510) and a second sub-battery module(520) arranged in a first direction; and
the connector position alignment assembly(10) according to anyone of claims 1 to 13 disposed adjacent to a boundary between the first sub-battery module(510) and the second sub-battery module(520).

15. The battery module(500) of claim 14, wherein the first sub-battery module(510) and the second sub-battery module(520) respectively include the second part(200), and the first part(100) is coupled to a second part(200) of the first sub-battery module(510) and a second part(200) of the second sub-battery module(520) to connect the first sub-battery module(510) and the second sub-battery module(520).
